# EUROPÄISCHE PATENTSCHRIFT

(11) **EP 2 075 426 B1**
(45) Veröffentlichungstag und Bekanntmachung des Hinweises auf die Patenterteilung: **10.11.2010**
(21) Anmeldenummer: 08171414.9
(22) Anmeldetag: 12.12.2008
(51) Int. Cl.: F01N 3/28, F01N 13/18, F01N 1/08, F01N 3/022, F01N 13/16, F01N 3/20

(54) **Schiebesitz und Abgasbehandlungseinrichtung**
Sliding fit and exhaust gas treatment device
Ajustement glissant et dispositif de traitement des gaz d'échappement

(30) Priorität: 24.12.2007 DE 102007062662
(43) Veröffentlichungstag der Anmeldung: 01.07.2009
(73) Patentinhaber: J. Eberspächer GmbH & Co. KG, 73730 Esslingen (DE)
(72) Erfinder: Krause, Michael, 73095, Albershausen (DE); Wieland, Arthur, 72631, Aichtal (DE); Wirth, Georg, 73230, Kirchheim/Teck (DE); Jambrosic, Kresimir, 70327, Stuttgart (DE)
(74) Vertreter: BRP Renaud & Partner

(56) Entgegenhaltungen:
- EP-A- 0 537 603
- EP-A- 0 580 963
- EP-A- 1 329 608
- DE-A1- 3 922 667
- DE-A1- 4 318 343
- DE-C1- 19 918 301

## Beschreibung

Die vorliegende Erfindung betrifft einen Schiebesitz zur axial beweglichen Lagerung eines thermisch belasteten Rohrs an einem Bauteil, insbesondere in einer Abgasanlage einer Brennkraftmaschine. Die Erfindung betrifft außerdem eine Abgasbehandlungseinrichtung mit einem solchen Schiebesitz.

Um thermisch belastete Rohre an einem Träger dauerhaft befestigen zu können, ist es üblich, das jeweilige Rohr einerseits mit einem Festlager und andererseits mit einem Loslager am jeweiligen Träger anzubringen, damit sich die Länge des Rohrs relativ zum Träger ändern kann, ohne dass dabei unzulässig hohe Spannungen zwischen Rohr und Träger auftreten. Zur Realisierung eines derartigen Loslagers können sogenannte Schiebesitze verwendet werden, bei denen das Rohr in einer im jeweiligen Träger ausgebildeten Aufnahmeöffnung sitzt, und zwar so, dass das Rohr bezüglich seiner Längsachse relativ zum Träger axial verstellbar ist.

Thermisch belastete Rohre, die mittels Schiebesitz an einem Trägerbauteil gelagert werden, kommen in vielen Bereichen der Technik zur Anwendung, vorwiegend dort, wo heiße oder kalte Fluide in Rohren transportiert werden. Beispielsweise trifft man diese Problematik bei Heizungsanlagen, Kühlanlagen und Abgasanlagen. Abgasanlagen finden sich bei Heizgeräten sowie bei Brennkraftmaschinen, vorzugsweise in Kraftfahrzeugen. Beispielsweise kann eine Abgasbehandlungseinrichtung zumindest ein Rohr enthalten, das in einem Gehäuse der Abgasbehandlungseinrichtung mit Hilfe eines solchen Schiebesitzes gelagert ist. Eine Abgasbehandlungseinrichtung kann beispielsweise ein Partikelfilter, ein Katalysator oder ein Schalldämpfer oder eine beliebige Kombination derartiger Einrichtungen sein.

Ein herkömmlicher Schiebesitz kann zwischen dem Rohr und der jeweiligen Aufnahmeöffnung ein gewisses Radialspiel aufweisen, um die axiale Verstellbarkeit des Rohrs im Sitz zu erleichtern. Dies ist für Anwendungen, die eine gewisse Gasdichtigkeit erfordern, ungünstig, da durch den Schiebesitz hindurch grundsätzlich ein Gasaustausch möglich ist. Insbesondere bei einer Abgasanlage ist im Hinblick auf schärfere Umweltschutzbestimmungen ein Entweichen von Abgas in die Umgebung, beispielsweise durch einen Schiebesitz, zu vermeiden.

Ferner besteht bei herkömmlichen Schiebesitzen grundsätzlich das Problem einer vergleichsweise hohen mechanischen Belastung des Rohrs beziehungsweise des jeweiligen Trägerteils innerhalb des Schiebesitzes. Mechanische Belastungen sind mit Verschleiß verbunden und können zu einer störenden Geräuschentwicklung führen. EP0 537 603 A1, EP 1 329 608 A2, DE 43 18 343 A1, EP 0 580 963A1, DE 3922667 A1 offenbarren Schiebesitze.

Die vorliegende Erfindung beschäftigt sich mit dem Problem, für einen Schiebesitz beziehungsweise für eine Abgasbehandlungseinrichtung eine verbesserte Ausführungsform anzugeben, die sich insbesondere dadurch auszeichnet, dass grundsätzlich eine ausreichende Dichtungswirkung realisierbar ist und/oder dass die mechanische Belastung innerhalb des Schiebesitzes reduziert ist.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, den jeweiligen Schiebesitz mit einem Lagermaterial auszustatten, das einerseits mit Hilfe eines das Rohr koaxial umschließenden Halterohrs am jeweiligen Bauteil fest angebracht ist und das sich andererseits außen am Rohr radial abstützt, wobei das Lagermaterial eine Fasermatte ist, wobei zumindest ein sich am Rohr abstützender Gleitbereich des Lagermaterials durch ein Gleitgewebe gebildet ist, das an der Fasermatte angeordnet ist. Im Betrieb kann sich das Rohr entlang des Lagermaterials verschieben, wenn sich seine Länge aufgrund einer thermischen Belastung ändert. Da ein derartiges Lagermaterial beispielsweise eine gewisse federelastische Nachgiebigkeit aufweisen kann, reduziert sich die mechanische Belastung des Rohrs beziehungsweise des Bauteils innerhalb des Schiebesitzes. Gleichzeitig können radial orientierte Relativbewegungen zwischen Rohr und Bauteil gefedert beziehungsweise gedämpft werden, die beispielsweise aufgrund von Vibrationen im Betrieb auftreten können. Damit verbundene Geräusche lassen sich dadurch effektiv reduzieren. Außerdem ist es grundsätzlich möglich, das jeweilige Lagermaterial so dicht auszugestalten, dass damit eine hinreichende Abdichtung des Schiebesitzes realisierbar ist. Das Halterohr bewirkt dabei einerseits eine Axialführung des Rohrs, was die mechanische Stabilität des Schiebesitzes erhöht. Andererseits ermöglicht das Halterohr die Anordnung von Lagermaterial mit einer in Axialrichtung vergleichsweise großen Dimensionen. In der Folge lässt sich die Dichtungswirkung erhöhen und die Belastung des Lagermaterials im Betrieb reduzieren.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen, wie er in dem beigefügten Ansprüchen definiert ist.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen stark vereinfachten Längsschnitt durch eine Abgasbehandlungseinrichtung,
- Fig. 2: eine vergrößerte Darstellung eines Details der Abgasbehandlungseinrichtung im Bereich einer Rohranordnung,
- Fig. 3 bis 6: stark vereinfachte vergrößerte Darstellungen der Rohranordnung im Bereich eines Schiebesit- zes, bei unterschiedlichen Ausführungsformen,
- Fig. 7 und 8: stark vereinfachte vergrößerte Darstellungen des Schiebesitzes, bei verschiedenen Ausfüh- rungsformen,
- Fig. 9 und 10: jeweils einen Längsschnitt wie in Fig. 1, je- doch bei anderen Ausführungsformen.

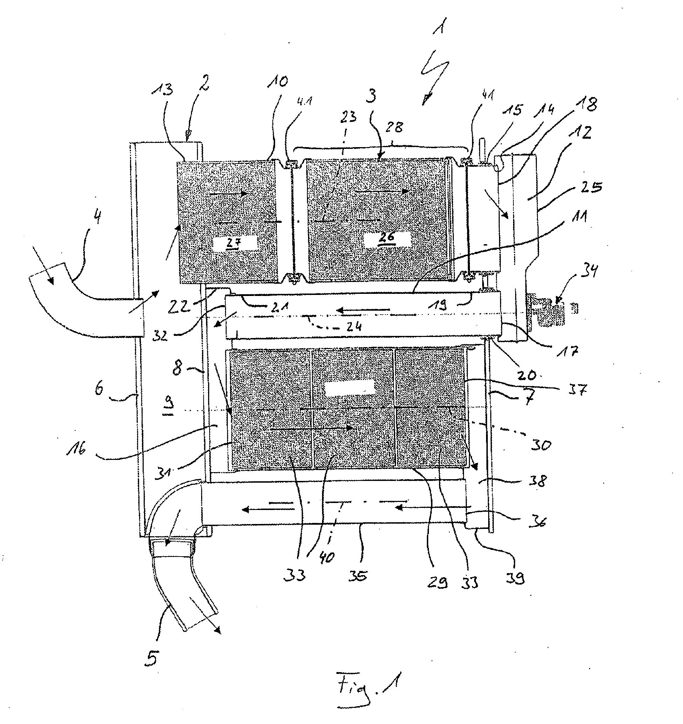

Entsprechend Fig. 1 umfasst eine Abgasbehandlungseinrichtung 1 ein Gehäuse 2 sowie zumindest eine Rohranordnung 3. Das Gehäuse 2 weist zumindest einen Eintritt 4 und wenigstens einen Austritt 5 auf. Das Gehäuse 2 besitzt in der hier gezeigten Ausführungsform zwei Endböden 6 und 7 sowie einen Zwischenboden 8. Der erste Endboden 6 begrenzt mit dem Zwischenboden 8 im Gehäuse 2 eine Eintrittskammer 9. An den ersten Endboden 6 ist der Eintritt 4 in Form eines Eintrittsstutzens angeschlossen.

Die Rohranordnung 3 umfasst zumindest zwei miteinander kommunizierende Rohre, nämlich ein erstes Rohr 10 und ein zweites Rohr 11. Das erste Rohr 10 kommuniziert eingangsseitig mit der Eintrittskammer 9 und ausgangsseitig mit einer Umlenkkammer 12. Das erste Rohr 10 ist in einem Eingangsabschnitt 13 an einem Trägerbauteil befestigt, das hier durch das Gehäuse 2 beziehungsweise durch einen Bestandteil des Gehäuses 2, nämlich hier durch den Zwischenboden 8 gebildet ist. In einem Ausgangsabschnitt 14 ist das erste Rohr 10 mit einem Schiebesitz 15 ebenfalls am Trägerbauteil, also am Gehäuse 2 gehaltert, und zwar am zweiten Endboden 7. Das zweite Rohr 11 kommuniziert eingangsseitig mit der Umlenkkammer 12 und ausgangsseitig mit einer Kammer 16, die als weitere Umlenkkammer oder als Verteilerkammer dienen kann. Über die Umlenkkammer 12 kommuniziert ein Eingang 17 des zweiten Rohrs 11 mit einem Ausgang 18 des ersten Rohrs 10. Da die Umlenkkammer 12 die beiden Rohre 10, 11 miteinander kommunizierend verbindet, kann sie im Folgenden auch als Verbindungskammer 12 bezeichnet werden. Das zweite Rohr 11 ist nun in einem Eingangsabschnitt 19 mit einem Schiebesitz 20 am Trägerbauteil, also am Gehäuse 2, speziell am zweiten Endboden 7 gehaltert. Außerdem ist das zweite Rohr 11 in einem Ausgangsabschnitt 21 ebenfalls am Trägerbauteil, also am Gehäuse 2 befestigt. Im vorliegenden Fall enthält das Gehäuse 2 zur Ausbildung der Kammer 16 einen Schalenkörper 22, an dem das zweite Rohr 11 in seinem Ausgangsabschnitt 21 befestigt ist.

Das erste Rohr 10 weist eine erste Längsmittelachse 23 auf. Das zweite Rohr 11 weist dementsprechend eine zweite Längsmittelachse 24 auf. Bei der gezeigten Ausführungsform erstrecken sich die beiden Längsmittelachsen 23, 24 parallel zueinander. Beide Rohre 10, 11 durchsetzen den jeweiligen Boden 7 in separaten Öffnungen.

Bei der hier gezeigten Ausführungsform münden der Ausgang 18 des ersten Rohrs 10 und der Eingang 17 des zweiten Rohrs 11 jeweils offen in der Verbindungskammer 12. Die Verbindungskammer 12 ist hier durch einen oder mehrere Schalenkörper 25 gebildet, die an den Ausgangsabschnitt 14 des ersten Rohrs 10 und an den Eingangsabschnitt 19 des zweiten Rohrs 11 angebaut sind. Alternativ ist auch eine Ausführungsform möglich, bei welcher besagte Schalenkörper 25 am zweiten Endboden 7 angebaut sind. Ebenso ist eine Ausführungsform möglich, bei welcher anstelle einer Verbindungskammer 12 ein entsprechend gebogenes Verbindungsrohr verwendet wird, um die beiden Rohre 10, 11 miteinander zu verbinden. Besagtes Verbindungsrohr verbindet dann den Ausgang 18 des ersten Rohrs 10 mit dem Eingang 17 des zweiten Rohrs 11.

Bei der hier gezeigten Ausführungsform handelt es sich um eine Abgasbehandlungseinrichtung 1, die in einer Abgasanlage einer Brennkraftmaschine zum Einsatz kommen kann, wobei sich diese Brennkraftmaschine insbesondere in einem Kraftfahrzeug, bevorzugt in einem Nutzfahrzeug, befinden kann. Die Abgasbehandlungseinrichtung 1 ist hier multifunktional ausgestaltet und enthält zumindest ein Partikelfilterelement 26, das im ersten Rohr 10 angeordnet ist. Zusätzlich weist die Abgasbehandlungseinrichtung 1 hier zumindest ein Oxidationskatalysatorelement 27 auf, das hier ebenfalls im ersten Rohr 10 angeordnet ist, und zwar zweckmäßig stromauf des Partikelfilterelements 26. Außerdem kann die Abgasbehandlungseinrichtung 1 eine Schalldämpferfunktion erfüllen.

Das erste Rohr 10 besitzt hier einen radial herausnehmbaren Axialabschnitt 28, der hier durch eine geschweifte Klammer gekennzeichnet ist. Besagter Axialabschnitt 28 ist mittels Schnellbefestigungselementen 41, beispielsweise in Form von Schellen oder dergleichen, an den anderen Abschnitten des ersten Rohrs 10 befestigt. Hierzu können entsprechende Flansche ausgebildet sein, mit denen die Befestigungselemente 41 zusammenwirken. Das Partikelfilterelement 26 ist zweckmäßig innerhalb des radial herausnehmbaren Axialabschnitts 28 angeordnet. Auf diese Weise kann das jeweilige Partikelfilterelement 26 beispielsweise einfach erneuert oder ausgetauscht werden. Zweckmäßig wird dabei die gesamte Einheit aus Axialabschnitt 28 und darin eingebrachtem Partikelfilterelement 26 getauscht.

Im Beispiel ist zudem ein drittes Rohr 29 vorgesehen, dessen Längsmittelachse 30 ebenfalls parallel zu den Längsmittelachsen 23, 24 der beiden anderen Rohre 10, 11 ausgerichtet sein kann. Ein Eingang 31 des dritten Rohrs 29 kommuniziert mit einem Ausgang 32 des zweiten Rohrs 11. Im Beispiel münden das zweite Rohr 11 und das dritte Rohr 29 in die Kammer 16, so dass diese die kommunizierende Verbindung zwischen den beiden Rohren 11, 29 herstellt. Das dritte Rohr 29 kann zumindest einen SCR-Katalysator 33 enthalten. Im Beispiel sind drei derartige Katalysatorelemente 33 im dritten Rohr 29 hintereinander angeordnet. Mit Hilfe eines derartigen SCR-Katalysators 33 lässt sich eine selektive katalytische Reduktion bestimmter Schadstoffe realisieren.

Im Beispiel weist die Abgasbehandlungseinrichtung 1 außerdem eine Dosiereinrichtung 34 auf, mit deren Hilfe ein flüssiges Edukt in den Abgasstrom eingebracht werden kann. Zweckmäßig kann mit Hilfe der Dosiereinrichtung 34 Ammoniak oder Harnstoff oder bevorzugt eine wässrige Harnstofflösung in den Abgasstrom eingebracht werden. Harnstoff lässt sich durch eine Hydrolysereaktion zu Ammoniak aufbereiten. Mit Hilfe von Ammoniak lassen sich Stickoxide in Stickstoff umsetzen. Die entsprechenden Reaktionen laufen im SCR-Katalysator 33 ab, beispielsweise kann das zuerst durchströmte Katalysatorelement 33 die Hydrolyse ermöglichen, während in den folgenden Elementen 33 Ammoniak umgesetzt wird.

Die Dosiereinrichtung 34 kann so angeordnet beziehungsweise so ausgestaltet sein, dass sie das jeweilige Edukt jedenfalls stromauf des SCR-Katalysators 33 in den Abgasstrom einbringt. Zweckmäßig erfolgt die Eindüsung stromab des Partikelfilters 26. Grundsätzlich kann die Eindüsung in die Umlenkkammer 12 erfolgen. Bevorzugt bringt die Dosiereinrichtung 34 das Edukt in den Eingangsabschnitt 19 des zweiten Rohrs 11 ein. Die Eindüsung des Edukts kann jedoch auch stromauf des zweiten Rohrs 11 erfolgen. Das zweite Rohr 11 kann dabei als Mischstrecke für Abgas und eingebrachtes Edukt dienen, um eine intensive Durchmischung von Abgas und Edukt zu realisieren.

Bei dem hier gezeigten Beispiel weist die Abgasbehandlungseinrichtung außerdem ein viertes Rohr 35 auf, das zum Austritt 5 führt beziehungsweise das mit dem als Austrittsstutzen ausgestalteten Austritt 5 verbunden ist. Ein Eingang 36 des vierten Rohrs 35 ist mit einem Ausgang 37 des dritten Rohrs 29 kommunizierend verbunden. Erreicht wird dies hier durch eine weitere Umlenkkammer 38, die mit Hilfe eines Schalenkörpers 39 und dem zweiten Endboden 7 realisiert ist. Eine Längsmittelachse 40 des vierten Rohrs 35 erstreckt sich im vorliegenden Fall wieder parallel zu den Längsmittelachsen 23, 24 des ersten Rohrs 10 beziehungsweise des zweiten Rohrs 11.

In der hier gezeigten Schnittansicht der Abgasbehandlungseinrichtung 1 ist jeweils nur ein einziges erstes Rohr 10, ein einziges zweites Rohr 11, ein einziges drittes Rohr 29 und ein einziges viertes Rohr 35 erkennbar. Es ist klar, dass bei besonderen Ausführungsformen zumindest eines der genannten Rohre 10, 11, 29, 35 auch mehrfach vorhanden sein kann. Beispielsweise können mehrere zweite Rohre 11 und/oder mehrere dritte Rohre 29 mit SCR-Katalysatoren 33 vorhanden sein.

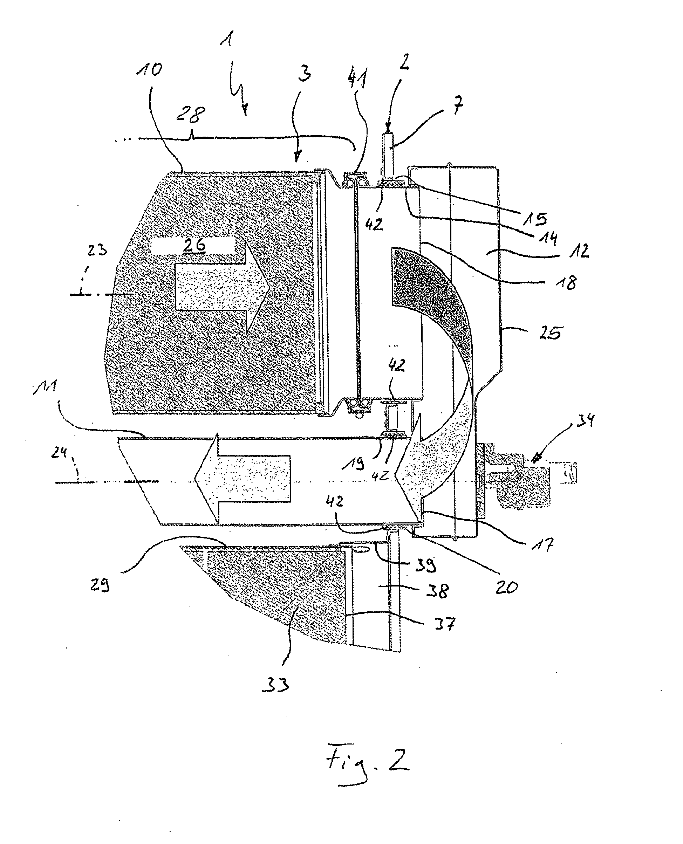

Entsprechend Fig. 2 weist der Schiebesitz 15, mit welcher das erste Rohr 10 am Trägerbauteil 2 beziehungsweise Gehäuse 2 gelagert ist, ein Lagermaterial 42 auf. Dieses Lagermaterial 42 ist bezüglich des Bauteils 2, also bezüglich des Gehäuses 2 ortsfest angeordnet und radial außen am ersten Rohr 10 abgestützt. Das Rohr 10 kann sich somit in seiner axialen Richtung entlang des Lagermaterials 42 bewegen. Das Lagermaterial 42 selbst ist indirekt am Gehäuse 2 festgelegt.

Zusätzlich oder alternativ weist der Schiebesitz 20, mit dem das zweite Rohr 11 am Trägerbauteil 2 bzw. am Gehäuse 2 gelagert ist, ein Lagermaterial 42 auf, das sich einerseits radial außen am zweiten Rohr 11 radial abstützt und das indirekt am Bauteil 2 bzw. am Gehäuse 2 festgelegt ist.

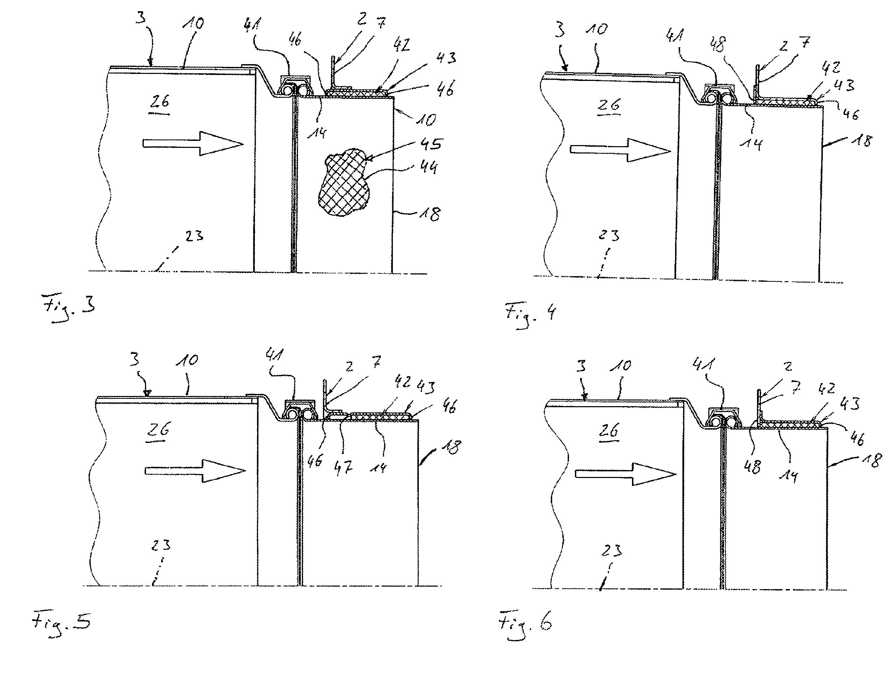

Zur indirekten Festlegung des Lagermaterials 42 am Bauteil 2 bzw. am Gehäuse 2 weist der jeweilige Schiebesitz 15 bzw. 20 entsprechend den Fig. 3 bis 6 ein Halterohr 43 auf, das fest am Bauteil 2 bzw. am Gehäuse 2, hier an dessen Endboden 7 angeordnet bzw. ausgebildet ist. Das Halterohr 43 umschließt das jeweilige Rohr 10 bzw. 11 koaxial. Das Halterohr 43 dient zur radialen und axialen Abstützung des Lagermaterials 42. Dementsprechend ist das Lagermaterial 42 radial zwischen dem Halterohr 43 und dem jeweiligen Rohr 10, 11 angeordnet. Das Lagermaterial 42 umschließt dabei das jeweilige Rohr 10, 11 in Umfangsrichtung vollständig. Das Lagermaterial 42 ermöglicht verschleißarme Relativbewegungen des jeweiligen Rohrs 10, 11 im Schiebesitz 15, 20 und kann zusätzlich eine hinreichende Gasdichtigkeit realisieren. Ferner lassen sich beispielsweise in einem Schalldämpfer vorhandene Räume besser nutzen.

Das Lagermaterial 42 ist eine Fasermatte.

Als Fasermatte kommen beispielsweise Lagermatten bzw. Isoliermatten aus Aluminiumoxidfasern, Mullitfasern, Glasfaser oder aus ähnlichen, temperaturbeständigen Fasern in Frage, die sich durch eine ausreichende Elastizität und Dichtigkeit sowie durch einen vergleichsweise niedrigen Reibwert auszeichnen. Derartige Fasermatten kommen beispielsweise zur Lagerung von Monolithen in Katalysatoren oder Partikelfiltern zum Einsatz. Sofern die Fasermatte ein Gewebe mit orientierter Faserrichtung aufweist, kann es zweckmäßig sein, die Fasermatte im Halterohr 43 so anzubringen, dass sie zumindest in einem sich am Rohr 10, 11 abstützenden Gleitbereich gegenüber der Längsmittelachse 23, 24 des jeweiligen Rohrs 10, 11 geneigte Faserrichtungen aufweist. In Fig. 3 ist rein exemplarisch ein Ausschnitt des mit 44 bezeichneten Gleitbereichs der mit 45 bezeichneten Lagermatte angedeutet. Erkennbar erstrecken sich die Fasern der Fasermatte 45 im Gleitbereich 44 mit etwa 45° gegenüber der Längsmittelachse 23 bzw. 24 des Rohrs 10, 11.

Als Drahtgestrick, nicht Gegenstand der Erfindung, kommen für das Lagermaterial 42 grundsätzlich solche Drahtgestricke in Frage, die zur Fixierung eines Katalysatorelements in einem Katalysatorgehäuse zur Anwendung kommen können. Derartige Drahtgestricke zeichnen sich durch eine vergleichsweise hohe Temperaturbeständigkeit sowie durch eine gewisse Federelastizität aus. Mit Hilfe des Drahtgestricks kann der jeweilige Sitz 15 beziehungsweise 20 das jeweilige Rohr 10, 11 radial fixieren und dennoch axiale Relativbewegungen zwischen Rohr 10, 11 und Gehäuse 2 beziehungsweise zweitem Endboden 7 zulassen.

Grundsätzlich kann das Drahtgestrick aus mehreren, in der Umfangsrichtung verteilt angeordneten, voneinander beabstandeten Gestrickkissen bestehen. Das Drahtgestrick ist dabei mehrteilig, also aus mehreren separaten Gestrickkissen gebildet. Falls es jedoch auf eine gewisse Dichtigkeit im Schiebesitz 15 beziehungsweise 20 ankommt, ist das jeweilige Drahtgestrick vorzugsweise so ausgestaltet, dass es zumindest aus einem Gestrickring besteht, der das jeweilige Rohr 10, 11 in Umfangsrichtung ringförmig geschlossen umfasst. Sofern mehrere Gestrickringe vorhanden sind, sind diese zweckmäßig axial nebeneinander angeordnet.

Entsprechend den Fig. 3, 5 bis 8 handelt es sich erfindungsgemäß beim Halterohr 43 bevorzugt um einen separat zum Bauteil 2 bzw. Gehäuse 2 hergestellten Körper. Dementsprechend ist das Halterohr 43 an das Gehäuse 2 bzw. Bauteil 2 angebaut. Gemäß Fig. 4 kann es sich beim Halterohr 43 alternativ auch um einen integralen Bestandteil des jeweiligen Bauteils 2, also hier des Gehäuses 2 handeln. Das Halterohr 43 ist hier integral am jeweiligen Bauteil 2 ausgeformt.

Gemäß den Ausführungsformen der Fig. 3 bis 8 kann das Halterohr 43 zumindest an einem seiner axialen Enden einen radial nach innen vorstehenden Kragen 46 aufweisen, der am Halterohr 43 integral ausgeformt ist. Der Kragen 46 kann in der Umfangsrichtung geschlossen oder segmentweise umlaufen. Er dient zur axialen Abstützung des Lagermaterials 42. Bei den Ausführungsformen der Fig. 3, 5 und 7 sowie 8 ist an jedem axialen Ende des Halterohrs 43 ein solcher Kragen 46 ausgeformt.

Bei der in Fig. 5 gezeigten Ausführungsform ist am Halterohr 43 zwischen seinen axialen Enden ein radial nach innen vorstehender Wulst 47 integral ausgeformt. Dieser Wulst 47 kann in der Umfangsrichtung ebenfalls geschlossen oder segmentiert umlaufen. Auch der Wulst 47 dient zur axialen Abstützung der Lagermatte 42.

Bei den Ausführungsformen der Fig. 4 und 6 ist an einem axialen Ende des Halterohr 43 eine Abdeckung 48 ausgebildet, die zur axialen Abstützung des Lagermaterials 42 dient. Die jeweilige Abdeckung 48 ragt dabei gegenüber dem Halterohr 43 radial nach innen vor. Auch die Abdeckung 48 kann sich in der Umfangsrichtung geschlossen oder segmentweise erstrecken. Bei der in Fig. 4 gezeigten Ausführungsform ist die Abdeckung 48 ein separates Bauteil, das an das Gehäuse 2 angebaut ist. Bei der in Fig. 6 gezeigten Ausführungsform ist die Abdeckung 48 integral am Gehäuse 2 ausgeformt. Im Beispiel ist hierzu das Gehäuse 2 im Bereich seines Innenbodens 7 über das Halterohr 43 vorstehend radial nach innen verlängert.

Die hier gezeigten Ausführungsformen für das Halterohr 43 sind rein exemplarisch und ohne Beschränkung der Allgemeinheit zu verstehen, so dass grundsätzlich auch Kombinationen der gezeigten Ausführungsformen sowie andere, hier nicht gezeigte Ausführungsformen zur Realisierung des Halterohrs 43 möglich sind.

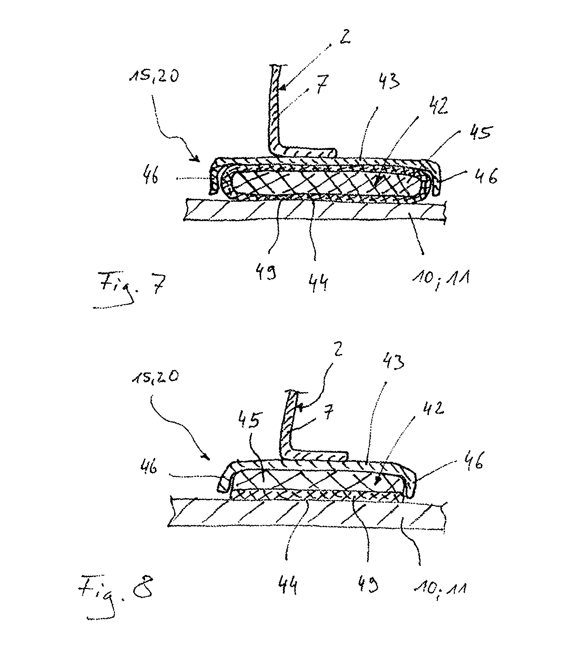

In den Fig. 7 und 8 ist der sich am Rohr 10, 11 abstützende Gleitbereich 44 des Lagermaterials 42 deutlich erkennbar. Bei den hier gezeigten Ausführungsformen ist zumindest dieser Gleitbereich 44 durch ein Gleitgewebe 49 gebildet, das auf geeignete Weise an der Fasermatte 45 bzw. am Lagermaterial 42 angeordnet ist. Bei der in Fig. 7 gezeigten Ausführungsform umhüllt das Gleitgewebe 49 die Fasermatte 45 schlauchartig. Im Unterschied dazu zeigt Fig. 8 einen Schichtaufbau, bei dem sich die Fasermatte 45 über das Gleitgewebe 49 am Rohr 10, 11 abstützt. Das Gleitgewebe 49 bildet hierbei nur den radial innenliegenden Gleitbereich 44 des Lagermaterials 42.

Das Gleitgewebe 49 kann aus einem Glasfasergewebe und/oder aus einem Keramikfasergewebe gebildet sein. Das Gleitgewebe zeichnet sich durch einen reduzierten Reibungswiderstand aus, wodurch der Verschleiß im Schiebesitz 15, 20, reduziert werden kann. Die mit Bezug auf Fig. 3 beschriebene Faserausrichtung der Fasermatte 45 gilt analog für das Gleitgewebe 49, sofern dieses zur Ausbildung des Gleitbereichs 44 vorgesehen ist.

Das Lagermaterial 42 kann im eingebauten Zustand zumindest in radialer Richtung vorgepresst oder vorgespannt sein, so dass im Schiebesitz 15, 20 eine radial vorgespannte Kontaktierung zwischen Lagermaterial 42 und Rohr 10, 11 realisierbar ist. Zum Einbauen kann das jeweilige Rohr 10, 11 endseitig einen hier nicht dargestellten Konus aufweisen.

Das Rohr 10, 11 kann zumindest im Bereich des Schiebesitzes 15, 20 eine reibungsreduzierende bzw. verschleißmindernde Außenseite aufweisen. Beispielsweise kann hierzu das Rohr 10, 11 aus einem entsprechend glatten Material, z.B. kaltgewalztes Blech, hergestellt sein. Die Oberfläche kann poliert sein. Ferner kann eine verschleißreduzierende Oberflächenbeschichtung vorgesehen sein. Die Oberfläche kann gehärtet und/oder nitriert sein. Darüber hinaus kann dem jeweiligen Schiebesitz 15, 20 ein hitzebeständiger Schmierstoff beigefügt werden, der beispielsweise in das Lagermaterial 42 eingebracht ist.

Für das Lagermaterial 42 ist es zweckmäßig, die Materialauswahl und/oder die Dimensionierung auf die im Betrieb des jeweiligen Anwendungsfalls zu erwartenden Wärmedehnungen am Rohr 10, 11 einerseits und am Gehäuse 2 andererseits abzustimmen, so dass stets eine ausreichende Dickenelastizität gewährleistet ist, beispielsweise um stets einen hinreichenden radialen Druck auf das Rohr 10, 11 und somit eine ausreichende Dichtungswirkung erzielen zu können.

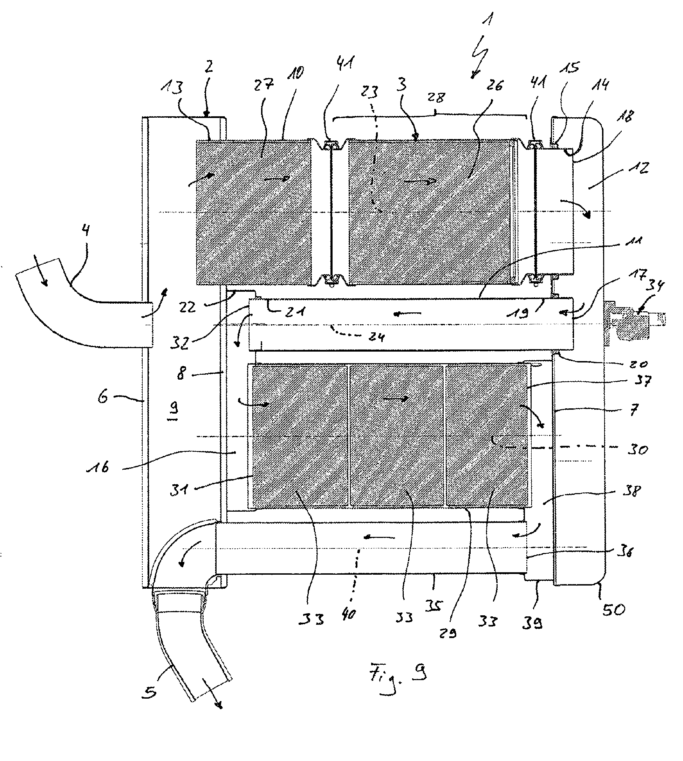

Die Ausführungsform gemäß Fig. 9 unterscheidet sich von der gemäß Fig. 1 lediglich dadurch, dass sich die Umlenkkammer 12 nunmehr über die gesamte Höhe oder Seite des zweiten Endbodens 7 bzw. der Abgasbehandlungseinrichtung 1 erstreckt. Hierdurch kann eine Absenkung des Gegendrucks erreicht werden. Zu diesem Zweck ist an den zweiten Endboden 7 ein schalenförmiger Deckelkörper 50 angebaut, so dass die Umlenkkammer 12 vom zweiten Endboden 7 und vom Deckelkörper 50 umschlossen bzw. begrenzt ist. Im Unterschied dazu bildet bei der Ausführungsform gemäß Fig. 1 der Schalenkörper 25 mit davon umschlossener bzw. begrenzter Umlenkkammer 12 ein bezüglich des zweiten Endbodens 7 separates Bauteil.

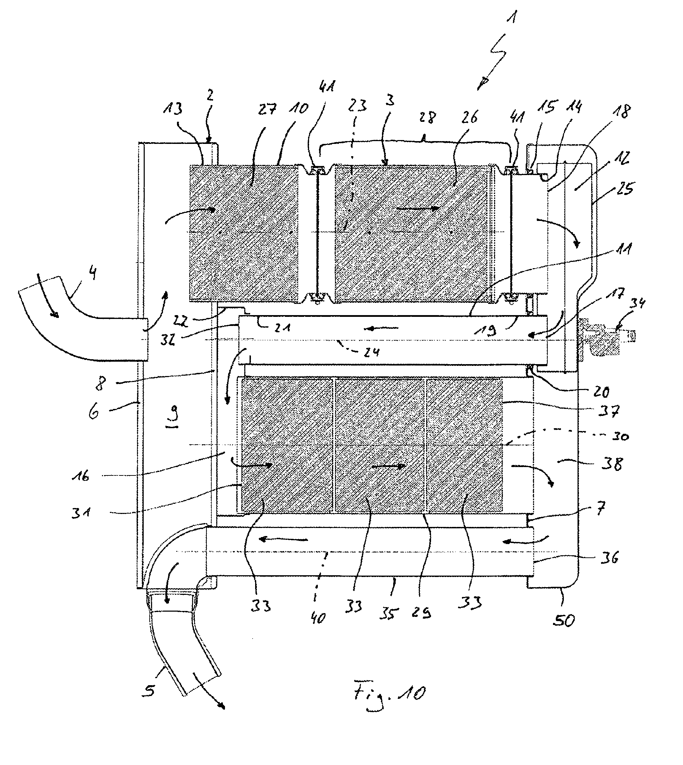

Bei der Ausführungsform gemäß Fig. 10 sind sowohl der bezüglich des zweiten Endbodens 7 separate Schalenkörper 25 zur Bildung der Umlenkkammer 12 als auch der sich über den gesamten zweiten Endboden 7 erstreckende und daran befestigte Deckelkörper 50 vorgesehen. Hierdurch ist die Umlenkkammer 12 innerhalb der Abgasbehandlungseinrichtung 1 doppelt gekammert, nämlich innerhalb des Schalenkörpers 25 und innerhalb des Deckelkörpers 50. Das Innere des Schalenkörpers 25 ist dabei gasdicht vom Inneren des Deckelkörpers 50 getrennt. Hierdurch kann der Deckelkörper 50 zusammen mit dem zweiten Endboden 7 den Raum bzw. die Kammer 38 bilden, die das Abgas vom dritten Rohr 29 in das vierte Rohr 35 umlenkt. Bei dieser Bauweise kann auf den anderen Schalenkörper 39 verzichtet werden, der bei den Ausführungsformen der Fig. 1 und 9 den genannten Umlenkraum 38 bildet bzw. umschließt. *****

## Patentansprüche

1. Schiebesitz zur axial beweglichen Lagerung eines thermisch belasteten Rohrs (10, 11) an einem Bauteil (2), insbesondere in einer Abgasanlage einer Brennkraftmaschine,
- mit einem fest am Bauteil (2) angeordneten oder ausgebildeten Halterohr (43), welches das Rohr (10, 11) koaxial umschließt,
- mit einem koaxial zwischen dem Rohr (10, 11) und dem Halterohr (43) angeordneten Lagermaterial (42), welches das Rohr (10, 11) in Umfangsrichtung vollständig umschließt und das am Rohr (10, 11) radial und am Halterohr (43) radial und axial abgestützt ist,
**dadurch gekennzeichnet,**
- **dass** das Lagermaterial (42) eine Fasermatte (45) ist,
- **dass** zumindest ein sich am Rohr (10, 11) abstützender Gleitbereich (44) des Lagermaterials (45) durch ein Gleitgewebe (49) gebildet ist, das an der Fasermatte (45) angeordnet ist.

2. Schiebesitz nach Anspruch 1,
**dadurch gekennzeichnet,**
**dass** das Gleitgewebe (49) die Fasermatte (45) schlauchartig umhüllt.

3. Schiebesitz nach Anspruch 1 oder 2
**dadurch gekennzeichnet,**
**dass** das Gleitgewebe (49) aus einem Glasfasergewebe und/oder aus einem Keramikfasergewebe besteht.

4. Schiebesitz nach einem der Ansprüche 1 bis 3,
**dadurch gekennzeichnet,**
- **dass** das Halterohr (43) ein separat zum Bauteil (2) hergestellter Körper ist, der an das Bauteil (2) angebaut ist, oder
- **dass** das Halterohr (43) integral am Bauteil ausgeformt ist.

5. Schiebesitz nach einem der Ansprüche 1 bis 4,
**dadurch gekennzeichnet,**
**dass** zur axialen Abstützung des Lagermaterials (42) an wenigstens einem axialen Ende des Halterohrs (43) ein radial nach innen vorstehender, geschlossen oder segmentiert umlaufender Kragen (46) integral ausgeformt ist.

6. Schiebesitz nach einem der Ansprüche 1 bis 5,
**dadurch gekennzeichnet,**
**dass** zur axialen Abstützung des Lagermaterials (42) zwischen axialen Enden des Halterohr (43) ein radial nach innen vorstehender, geschlossen oder segmentiert umlaufender Wulst (47) integral ausgeformt ist.

7. Schiebesitz nach einem der Ansprüche 1 bis 6,
**dadurch gekennzeichnet,**
**dass** zur axialen Abstützung des Lagermaterials (42) an wenigstens einen axialen Ende des Halterohrs (43) eine radial nach innen vorstehende, geschlossen oder segmentiert umlaufende Abdeckung (48) an das Bauteil (2) angebaut oder am Bauteil (2) integral ausgeformt ist.

8. Schiebesitz nach einem der Ansprüche 1 bis 7,
**dadurch gekennzeichnet,**
**dass** die Fasermatte (45) aus Aluminiumoxidfasern, aus Mullitfasern, aus Glasfasern oder aus einer Kombination wenigstens zwei dieser Fasern gebildet ist.

9. Abgasbehandlungseinrichtung, insbesondere für eine Abgasanlage einer Brennkraftmaschine,
- mit einem Gehäuse (2), das zumindest einen Eintritt (4) und zumindest einen Austritt (5) aufweist,
- mit mindestens einem Rohr (10, 11), das mit einem Schiebesitz (15, 20) nach einem der Ansprüche 1 bis 8 am als Bauteil dienenden Gehäuse (2) oder an einem als Bauteil dienenden Bestandteil (7) des Gehäuses (2) gelagert ist.

10. Abgasbehandlungseinrichtung nach Anspruch 9,
**dadurch gekennzeichnet,**
- **dass** eine Rohranordnung (3) vorgesehen ist, die zumindest zwei miteinander kommunizierende Rohre (10, 11) aufweist,
- **dass** ein erstes Rohr (10) in einem Eingangsabschnitt (13) am Gehäuse (2) befestigt ist,
- **dass** das erste Rohr (10) in einem Ausgangsabschnitt (14) mit einem Schiebesitz (15) am Gehäuse (2) gehaltert ist,
- **dass** ein zweites Rohr (11), dessen Eingang (17) mit einem Ausgang (18) des ersten Rohrs (10) verbunden ist, in einem Eingangsabschnitt (19) mit einem Schiebesitz (20) am Gehäuse (2) gehaltert ist,
- **dass** das zweite Rohr (11) in einem Ausgangsabschnitt (21) am Gehäuse (2) befestigt ist,
- **dass** zumindest einer der Schiebesitze (15, 20) nach einem der Ansprüche 1 bis 8 ausgestaltet ist, wobei das Gehäuse (2) oder ein Bestandteil (7) des Gehäuses (2) das Bauteil bildet.

11. Abgasbehandlungseinrichtung nach Anspruch 10,
**dadurch gekennzeichnet,**
- **dass** ein gebogenes Verbindungsrohr vorgesehen ist, das den Ausgang (18) des ersten Rohrs (10) mit dem Eingang (17) des zweiten Rohrs (11) verbindet, oder
- **dass** eine Verbindungskammer (12) vorgesehen ist, in welcher der Ausgang (18) des ersten Rohrs (10) und der Eingang (17) des zweiten Rohrs (11) offen münden.

## Claims

1. A sliding seat for the axially movable mounting of a thermally loaded pipe (10, 11) on a component (2), more preferably in an exhaust system of a combustion engine,
- with a component (2) with a retaining pipe (43) arranged on or formed on the component (2) in a fixed manner, which coaxially encloses the pipe (10, 11),
- with a bearing material (42) arranged coaxially between the pipe (10, 11) and the retaining pipe (43), which completely encloses the pipe (10, 11) in circumferential direction and which is radially supported on the pipe (10, 11) and radially and axially supported on the retaining pipe (43)
**characterized**
- **in that** the bearing material (42) is a fibre mat (45),
- **in that** at least one sliding region (44) of the bearing material (45) supporting itself on the pipe (10, 11) is formed by a sliding fabric (49) which is arranged on the fibre mat (45).

2. The sliding seat according to Claim 1, **characterized in that** the sliding fabric (49) envelopes the fibre mat (45) hose-like.

3. The sliding seat according to Claim 1 or 2, **characterized in that** the sliding fabric (49) consists of a glass fibre fabric and/or of a ceramic fibre fabric.

4. The sliding seat according to any one of the Claims 1 to 3, **characterized**
- **in that** the retaining pipe (43) is a body produced separately to the component (2), which is mounted on to the component (2)
or
- **in that** the retaining pipe (43) is integrally moulded out of the component.

5. The sliding seat according to any one of the Claims 1 to 4, **characterized in that** for the axial supporting of the bearing material (42) on at least one axial end of the retaining pipe (43) a closed or segmented circumferential collar (46) radially protruding to the inside is integrally moulded.

6. The sliding seat according to any one of the Claims 1 to 5, **characterized in that** for the axial supporting of the bearing material (42) between axial ends of the retaining pipe (43) a closed or segmented circumferential bead (47) radially protruding to the inside is integrally moulded.

7. The sliding seat according to any one of the Claims 1 to 6, **characterized in that** for the axial supporting of the bearing material (42) on at least one axial end of the retaining pipe (43) a closed or segmented circumferential cover (48) radially protruding to the inside is mounted on to the component (2) or integrally moulded out of the component (2).

8. The sliding seat according to any one of the Claims 1 to 7, **characterized in that** the fibre mat (45) is formed of aluminium oxide fibres, of mullite fibres, of glass fibres or of a combination of at least two of these fibres.

9. An exhaust gas treatment device, more preferably for an exhaust system of a combustion engine,
- with a housing (2) having at least one entry (4) and at least one exit (5),
- with at least one pipe (10, 11) which is mounted with a sliding seat (15, 20) according to any one of the Claims 1 to 8 on the housing (2) serving as component or on a constituent part (7) of the housing (2) serving as component.

10. The exhaust gas treatment device according to Claim 9, **characterized**
- **in that** a pipe arrangement (3) is provided, which comprises at least two pipes (10, 11) communicating with each other,
- **in that** a first pipe (10) is fastened to the housing (2) in an inlet section (13),
- **in that** the first pipe (10) is held on the housing (2) in an outlet section (14) with a sliding seat (15),
- **in that** a second pipe (11) whose inlet (17) is connected to an outlet (18) of the first pipe (10), is held on the housing (2) with a sliding seat (20) in an inlet section (19),
- **in that** the second pipe (11) in an outlet section (21) is fastened to the housing (2),
- **in that** at least one of the sliding seats (15, 20) is designed according to any one of the Claims 1 to 8, wherein the housing (2) or a constituent part (7) of the housing (2) forms the component.

11. The exhaust gas treatment device according to Claim 10, **characterized**
- **in that** a bent connecting pipe is provided, which connects the outlet (18) of the first pipe (10) with the inlet (17) of the second pipe (11), or
- **in that** a connecting chamber (12) is provided, in which the outlet (18) of the first pipe (10) and the inlet (17) of the second pipe (11) openly terminate.

## Revendications

1. Assise coulissante à des fins de positionnement mobile axialement d'un tuyau (10,11) chargé thermiquement sur un composant (2), notamment dans une installation de gaz d'échappement d'un moteur à combustion interne,
- comportant un tuyau de maintien (43) réalisé ou disposé fixement sur le composant (2), qui enveloppe coaxialement le tuyau (10,11),
- comportant un matériau de palier (42) disposé coaxialement entre le tuyau (10,11) et le tuyau de maintien (43), qui enveloppe complètement le tuyau (10,11) dans la direction circonférentielle et est appuyé radialement sur le tuyau (10,11) et radialement et axialement sur le tuyau de maintien (43),
**caractérisée en ce que**
- le matériau de palier (42) est un matelas de fibres (45),
- au moins une zone coulissante (44) du matériau de palier (45) s'appuyant sur le tuyau (10,11) est formée par un tissu coulissant (49), qui est disposé sur le matelas de fibres (45).

2. Assise coulissante selon la revendication 1,
**caractérisée en ce que**
le tissu coulissant (49) enveloppe à la manière d'un tuyau flexible le matelas de fibres (45).

3. Assise coulissante selon la revendication 1 ou 2,
**caractérisée en ce que**
le tissu coulissant (49) est constitué d'un tissu de fibres de verre et/ou d'un tissu de fibres céramiques.

4. Assise coulissante selon une des revendications 1 à 3,
**caractérisée en ce que**
- le tuyau de maintien (43) est un corps fabriqué séparément du composant (2), qui est monté sur le composant (2), ou
- le tuyau de maintien (43) est façonné en un seul tenant avec le composant.

5. Assise coulissante selon une des revendications 1 à 4,
**caractérisée en ce que**
à des fins d'appui axial du matériau de palier (42) est façonné en un seul tenant, sur au moins une extrémité axiale du tuyau de maintien (43), un collier (46) dépassant radialement vers l'intérieur, fermé ou en faisant le tour en segments.

6. Assise coulissante selon une des revendications 1 à 5,
**caractérisée en ce que**
à des fins d'appui axial du matériau de palier (42) est façonné en un seul tenant, entre les extrémités axiales du tuyau de maintien (43), un bourrelet (47) dépassant radialement vers l'intérieur, fermé ou en faisant le tout en segments.

7. Assise coulissante selon une des revendications 1 à 6,
**caractérisée en ce que**
à des fins d'appui axial du matériau de palier (42) sur au moins une extrémité axiale du tuyau de maintien (43), un couvercle (48) dépassant radialement vers l'intérieur, fermé ou en faisant le tour en segments est monté sur le composant (2) ou est façonné en un seul tenant vers le composant (2).

8. Assise coulissante selon une des revendications 1 à 7,
**caractérisée en ce que**
le matelas de fibres (45) est formé en fibres d'oxyde d'aluminium, en fibres de mullite, en fibres de verre ou en une combinaison d'au moins deux de ces fibres.

9. Dispositif de traitement de gaz d'échappement, notamment pour une installation de gaz d'échappement d'un moteur à combustion interne,
- comportant un logement (2), qui présente au moins une entrée (4) et au moins une sortie (5),
- comportant au moins un tuyau (10,11), qui est positionné avec une assise coulissante (15,20) selon une des revendications 1 à 8 sur le logement (2) servant de composant ou sur une partie intégrante (7) du logement (2) servant de composant.

10. Dispositif de traitement de gaz d'échappement selon la revendication 9,
**caractérisé en ce que**
- un agencement de tuyaux (3) est prévu, qui présente au moins deux tuyaux (10,11) communiquant l'un avec l'autre,
- un premier tuyau (10) est fixé dans une portion de sortie (13) sur le logement (2),
- le premier tuyau (10) est maintenu dans une portion de sortie (14) par une assise coulissante (15) sur le logement (2),
- un deuxième tuyau (11), dont l'entrée (17) est reliée à une sortie (18) du premier tuyau (10), est maintenue dans une position d'entrée (19) par une assise coulissante (20) sur le logement (2),
- le deuxième tuyau (11) est fixé sur le logement dans une portion de sortie (21),
- au moins une des assises coulissantes (15,20) est réalisée selon une des revendications 1 à 8, moyennant quoi le logement (2) ou une partie intégrante (7) du logement (2) forme le composant.

11. Dispositif de traitement de gaz d'échappement selon la revendication 10,
**caractérisé en ce que**
- un tuyau de liaison arqué est prévu, qui relie la sortie (18) du premier tuyau (10) à l'entrée (17) du deuxième tuyau (11), ou
- une chambre de liaison (12) est prévue, dans laquelle la sortie (18) du premier tuyau (10) et l'entrée (17) du deuxième tuyau (11) débouchent.
